# EUROPEAN PATENT SPECIFICATION

(11) **EP 1 813 851 B1**
(45) Date of publication and mention of the grant of the patent: **16.11.2011**
(21) Application number: 06380023.9
(22) Date of filing: 27.01.2006
(51) Int. Cl.: F16L 37/20

(54) **Quick coupling for hose and tube connections**
Schnellkupplung für Schlauch- und Rohrverbindungen
Raccord rapide pour des raccords de tuyaux et de tuyaux souples

(43) Date of publication of application: 01.08.2007
(73) Proprietor: Portas Euro-Rapid, S.L., 17469 Vilamalla (Girona) (ES)
(72) Inventor: Portas Pore, Joaquim Portas Euro-Rapid, S.L., 17469 Vilamalla (Girona) (ES)
(74) Representative: Barroso Sánchez-Lafuente, Ignacio M.

(56) References cited:
- GB-A- 689 358
- US-A- 4 295 670
- US-A- 4 722 555

## Description

### Technical field of the invention

The present invention relates to a quick coupling for hose and tube connections, of the type that comprise a male piece to be joined to the end of a first tube or hose, and a female piece to be joined to the end of a second tube or hose, which fit inside one another in a similar manner to a ball joint, and which comprise a mechanism for clamping the male piece against the female piece in order to secure it in the coupled or clamped position.

The quick coupling of this invention is particularly applicable for use in the channelling of fluids in agriculture, for example in wine production, fish farms and the piping of gases and liquids in the industrial sector.

### Background of the invention

In wine production it is usual to connect or couple sections of hoses or tubes using fittings called connectors or quick couplings (also sometimes "spherical couplings"). These couplings generally consist of a male piece and a female piece, which are fixed to corresponding ends of tubes or hoses. The male piece fits inside the female piece, in a similar manner to a ball joint and the coupled position is secured by a mechanism that clamps the male piece, by means of a wing or projection thereon, against the female piece along the coupling axis of the two pieces. In this coupled or clamped position, an essentially unbroken, continuous hose or tube is formed.

These conventional quick couplings do work properly, although they are not entirely free from drawbacks, the main one being that when the duct of the hose or tube is full of liquid, for example wine or must, the accidental opening of the connector or coupling can cause liquid to be lost, with the consequent damage from both the economic and, on many occasions, the environmental point of view.

Document US 4,295,670 describes a quick coupling for hose and tube connections, of the type that comprise a male piece to be joined to the end of a first tube or hose and a female piece to be joined, to the end of a second tube or hose, which fit inside one another and which comprises a mechanism for clamping the male piece against the female piece in order to secure the coupled position, the clamping mechanism comprising at least one clamping lever that is solidly joined to the female piece by an articulation or fulcrum.

US 4,722,555, which is to be cited as the closest prior art, discloses a quick coupling for hose and tube connections, according to the preamble of claim 1.

The purpose of this invention is to provide another solution to the drawbacks posed by the quick couplings for hose and tube connections of the prior art, particularly related to the ease of assembling the male and the female pieces.

### Explanation of the invention

To this end, the object of this invention is a connector or quick coupling for hose and tube connections with an innovative structure and functionality, which is essentially characterised, according to the characterising portion of claim 1, in that the outer surface of the male piece is approximately spherical, defining together with the female piece a ball joint, both the male piece and he female piece being positioned concentrically in the assembled or coupled position, so that the male piece fits inside the female piece.

According to another feature of this invention, the coupling comprises a fastening pin that is adapted to pass, parallel to the rotational axis of said articulation, through a hole in the hook which protrudes from the clamping lever, when in said coupled or clamped position, through an opening therein, the transversal dimension of the fastening pin being greater that the transversal dimension of said opening, in such a way that, in said coupled or clamped position, the pin prevents the rotation of the lever around said articulation, and the consequent opening and spillage of liquid when sufficient force is applied to the coupling to open it.

According to another feature of this invention, the coupling comprises an arm that is adapted so as to pass through the opening in the coupled or clamped position, which at one end is joined to the hook by an articulation and at the opposite end comprises the hole through which the aforementioned fastening pin passes.

Preferably, said fastening pin should be of the "beta pin" or "spring cotter pin" type.

### Brief description of the drawings

In the attached drawings an embodiment of the quick coupling for hose and tube connections that is the object of the invention is illustrated by means of a nonlimiting example. In said drawings:
- Fig. 1,: is a perspective view of a preferred embodiment of the quick coupling for hose and tube connections;
- Fig. 2,: is a side elevation view of the quick coupling shown in Fig. 1;
- Fig. 3,: is a close-up, according to III of Fig. 2; and

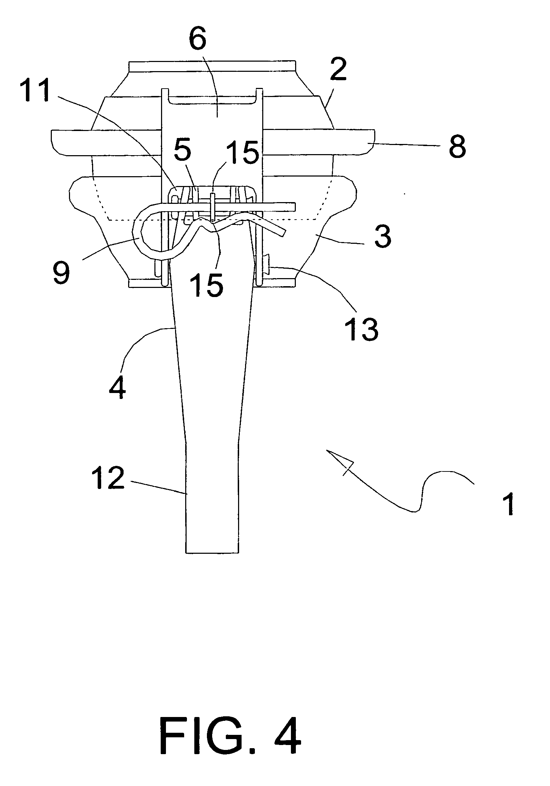

- Fig. 4,: is a front elevation view of the quick coupling shown in Fig. 1;

### Detailed description of the drawings

In said drawings it can be observed that the ball joint type connector or quick coupling 1 for hose and tube connections of this invention consists of a male piece 2 and female piece 3, which are joined to the ends of hoses or tubes, made from either stainless steel or iron, for all kinds of uses in industry, wine production, agriculture, etc., which are not shown in the drawings for the sake of simplicity, as pieces 2 and 3 are joined to the ends of the hoses or tubes in a completely conventional manner.

The male piece 2 fits inside the female piece 3 with a certain amount of adjustment, in a similar manner to a ball joint. For this reason, the outer surfaces of the pieces 2 and 3 are approximately spherical, at least in part, and they are positioned concentrically in the assembled or coupled position which is shown in the attached drawings.

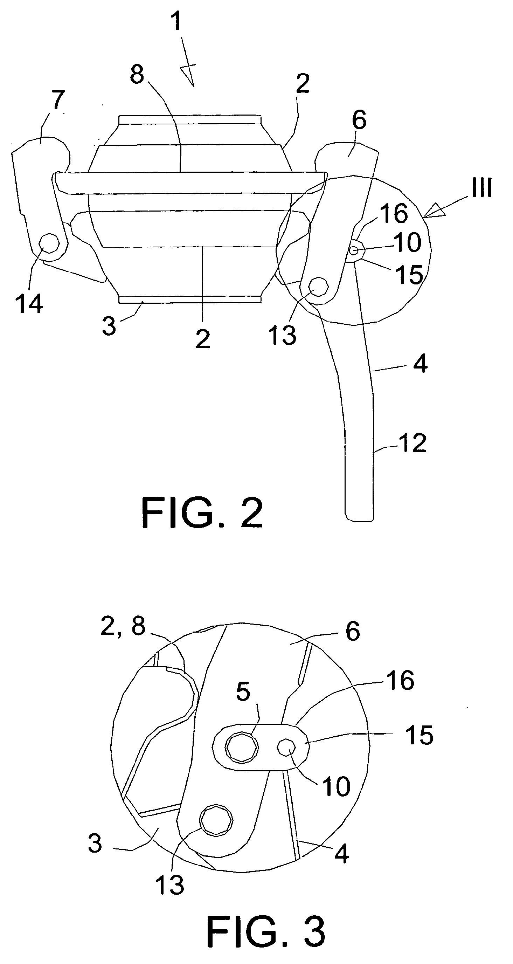

The connector or coupling 1 has a clamping lever 4 for securing the coupled or clamped position. The lever 4 is solidly joined to the female piece 3 by an articulation 13 and it has a hook 6 that is in turn joined to the input arm of the clamping lever 4, which is actuated by the free end or handle 12 and is of a suitable length to work properly as an input arm. On the diametrically opposite side of the female piece 3, it has a second hook 7 (Fig. 2) that is joined to the female piece 3 itself by another articulation 14 similar to the first articulation 13. The direct manual actuation of the hook 7 can be separate from actuation using the clamping lever 4.

The hooks 6 and 7, when made to rotate on their respective articulations 13 and 14 towards one another, clamp against a cup-shaped flange 8 around the perimeter of the male piece 2. In the coupled or clamped position shown in the drawings, the hooks 6 and 7 draw the male piece 2 against the female piece 3, thus assembling the connector or coupling 1 for connecting the two sections of hose or tube through which a fluid flows, such as for example must or wine in a wine-ageing plant or other enological treatment plant.

Outside the articulation 13, the female piece 3 has a hole 10 that is solidly joined to the articulation 13 itself and has a permanently parallel and equidistant axis to the rotational axis of the articulation. The hole 10 is delimited by a ring 15 that, in the coupled or clamped position illustrated in the drawings, protrudes from the hook 6 through an opening 11 in the clamping lever 4, so that it remains outside the opening. This hole 10 is positioned and designed for the pin 9 to pass through, parallel to the rotational axis of said articulation 13, which, being of a transversal dimension that is greater than the transversal aperture of said opening 11, in the coupled or clamped position, remains outside the lever 4, thus securing this position and preventing the connection from opening when the fluid contained inside tries to force open the connector or coupling 1.

In the embodiment of the connector or coupling 1 illustrated in the drawings, a pin 9 of the "beta pin" or "spring cotter pin" type is used, in accordance, for example, with Standard DIN 11024 or equivalent.

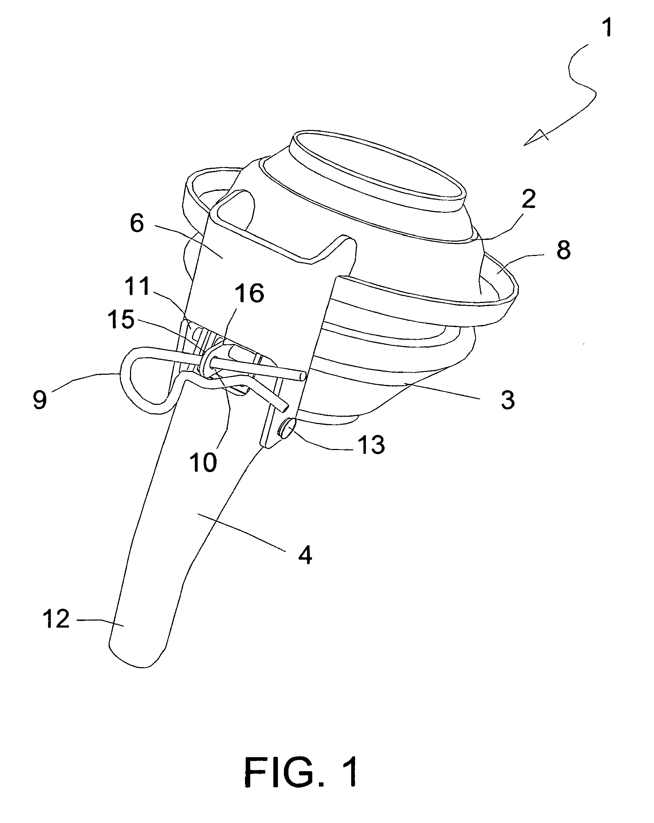

Lastly, as is shown in Figs. 1 and 3, the ring 15 and the hole 10 are positioned at one end of a small arm or lever 16, which is joined by its opposite end to the hook 6 by an articulation 5 using a pin, for example. In the coupled or clamped position, the articulation 5 is positioned on one side of the lever 4, whilst the ring 15 and the hole 10 are positioned on the opposite side, meaning that the pin 9 can act properly as a fastener.

Having sufficiently described the nature of the present invention and the way in which it is put into practice, it is stated that anything that does not alter, change or modify its fundamental principle, is subject to variations regarding details. Therefore, the coupling could comprise a second clamping lever and this variation would fall within the scope of the inventive concept.

## Claims

1. Quick coupling for hose and tube connections, of the type that comprise a male piece (2) to be joined to the end of a first tube or hose and a female piece (3) to be joined to the end of a second tube or hose, which fit inside one another and which comprise a mechanism for clamping the male piece against the female piece in order to secure the coupled position, the said clamping mechanism comprising at least one clamping lever (4) that is solidly joined to the female piece by an articulation (13) or fulcrum, the clamping lever having at least one hook (6, 7) that is in turn joined to the input arm of the clamping lever, the hook being adapted so as to clamp the male piece against the female piece, in a coupled or clamped position, by means of a projection (8) on the male piece when the clamping lever (4) is actuated in the right direction, and the outer surface of the female piece (3) being approximately spherical, **characterised in that** the outer surface of the male piece (2) is approximately spherical, defining together with the female piece (3) a ball joint, both the male piece (2) and the female piece (3) being positioned concentrically in the assembled or coupled position, so that the male piece (2) fits inside the female piece (3).

2. Quick coupling for hose and tube connections according to claim 1, **characterised in that** it comprises a fastening pin (9) that is adapted to pass, parallel to the rotational axis of said articulation (13), through a hole (10) connected to the hook (6) which protrudes from the clamping lever, when in said coupled or clamped position, through an opening (11) therein, the transversal dimension of the fastening pin being greater that the transversal dimension of said opening, in such a way that, in said coupled or clamped position, the pin prevents the rotation of the lever around said articulation (13).

3. Quick coupling for hose and tube connections according to claim 2, **characterised in that** it comprises an arm (16) that is adapted so as to pass through the opening (11) in the coupled or clamped position, which at one end is joined to the hook (6) by an articulation (5) and at the opposite end comprises the hole (10) through which the aforementioned fastening pin (9) passes.

4. Quick coupling for hose and tube connections according to claim 2 or claim 3, **characterised in that** said pin (9) is of the "beta pin" or "spring cotter pin" type.

## Patentansprüche

1. Schnellkupplung für Schlauch-Rohr-Verbindungen, mit einem Außengewinde (2), das mit dem Ende eines ersten Rohrs oder Schlauchs verbunden werden soll und einem Innengewinde (3), das mit dem Ende eines zweiten Rohrs oder Schlauch verbunden werden soll, die ineinander passen und einen Mechanismus aufweisen, mit dem das Außengewinde mit dem Innengewinde eine Klemmverbindung eingeht und **dadurch** die gekoppelte Stelle fest verbunden wird, wobei der Klemmmechanismus zumindest einen Klemmhebel (4) aufweist, der über ein Gelenk (13) oder einen Drehpunkt fest mit dem Innengewinde verbunden ist, wobei der Klemmhebel zumindest einen Haken (6, 7) aufweist, der wiederum mit dem Eingangsarm des Klemmhebels verbunden ist, wobei der Haken das Außengewinde mit dem Innengewinde über einen Vorsprung (8) am Außengewinde bei Betätigung des Klemmhebels (4) in der richtigen Richtung in einer Kupplungs- oder Klemmstellung verklemmen kann und die Außenfläche des Innengewindes (3) ungefähr kugelförmig ist, **dadurch gekennzeichnet, dass** die Außenfläche des Außengewindes (2) ungefähr kugelförmig ist und zusammen mit dem Innengewinde (3) ein Kugelgelenk bildet, wobei sowohl das Außengewinde (2) als auch das Innengewinde (3) konzentrisch in der Einbau- bzw. Kupplungsstellung positioniert sind, so dass das Außengewinde (2) in das Innengewinde (3) passt.

2. Schnellkupplung für Rohr-Schlauch-Verbindungen nach Anspruch 1, **dadurch gekennzeichnet, dass** sie einen Befestigungsbolzen (9) umfasst, der parallel zur Drehachse des Gelenks (13) durch eine Bohrung (10) geführt werden kann, die mit einem Haken (6) verbunden ist, der in der Kupplungs- bzw. Klemmstellung durch eine darin vorhandene Öffnung (11) vom Klemmhebel vorsteht, wobei das Quermaß des Befestigungsbolzen größer ist als das Quermaß der Öffnung, so dass in der Kupplungs- bzw. Klemmstellung die Drehung des Hebels um das Gelenk (13) durch den Bolzen verhindert wird.

3. Schnellkupplung für Rohr-Schlauch-Verbindungen nach Anspruch 2, **dadurch gekennzeichnet, dass** sie einen Arm (16) aufweist, der in der Kupplungs- bzw. Klemmstellung durch die Öffnung (11) geführt werden kann, die an einem Ende mit dem Haken (6) über ein Gelenk (5) verbunden ist und am entgegengesetzten Ende die Bohrung (10) aufweist, durch die der oben genannte Bolzen (9) geführt wird.

4. Schnellkupplung für Rohr-Schlauch-Verbindungen nach Anspruch 2 oder 3, **dadurch gekennzeichnet, dass** der Bolzen (9) eine Art "Beta-Bolzen" bzw. "Keilbolzen" ist.

## Revendications

1. Raccord rapide pour raccorder tuyaux et tuyaux souples, du type comprenant une pièce mâle (2) à unir en bout d'un premier tuyau ou tuyau souple et une pièce femelle (3) à unir en bout d'un second tuyau ou tuyau souple, s'emboîtant l'un dans l'autre et comprenant un mécanisme serrer la pièce mâle contre la pièce femelle afin de fixer la position d'accouplement, ledit mécanisme de serrage comprenant au moins un levier de serrage (4) qui est solidement uni à la pièce femelle par une articulation (13) ou grenouillère, le levier de serrage ayant au moins un crochet (6, 7) lui-même uni au bras d'introduction du levier de serrage, le crochet étant adapté de manière à serrer la pièce mâle contre la pièce femelle, dans une position accouplée ou serrée, au moyen d'une projection (8) sur la pièce mâle lorsque le levier de serrage (4) est actionné dans la direction correcte, et la surface externe de la pièce femelle (3) étant approximativement sphérique, **caractérisé en ce que** la surface externe de la pièce mâle (2) est approximativement sphérique, définissant avec la pièce femelle (3) un joint à rotule, les deux pièces mâle (2) et femelle (3) étant positionnées concentriquement dans la position assemblée ou accouplée, de façon à ce que la pièce mâle (2) s'emboîte à l'intérieur de la pièce femelle (3).

2. Raccord rapide pour raccorder tuyaux et tuyaux souples selon la revendication 1, **caractérisé en ce qu'**il comprend une goupille de fixation (9) adaptée pour passer, parallèlement à l'axe rotationnel de ladite articulation (13), par un trou (10) uni au crochet (6) qui dépasse du levier de serrage, lorsque dans cette position accouplée ou serrée, au travers d'une ouverture (11) incorporée, la dimension transversale de la goupille de fixation étant plus grande que la dimension transversale de ladite ouverture, de telle façon que, dans cette position accouplée ou serrée, la goupille empêche la rotation du levier autour de ladite articulation (13).

3. Raccord rapide pour raccorder tuyaux et tuyaux souples selon la revendication 2, **caractérisé en ce qu'**il comprend qu'il comprend un bras (16) adapté pour passer au travers de l'ouverture (11) dans la position accouplée ou serrée, qui à un bout est uni au crochet (6) par une articulation (5) et à l'autre bout comprend le trou (10) par lequel passe la goupille de fixation (9) mentionnée ci-dessus.

4. Raccord rapide pour raccorder tuyaux et tuyaux souples selon la revendication 2 ou la revendication 3, **caractérisé en ce que** ladite goupille (9) est du type goupille bêta ou « clavette d'arrêt à ressort ».
